# EUROPÄISCHE PATENTSCHRIFT

(11) **EP 1 853 839 B1**
(45) Veröffentlichungstag und Bekanntmachung des Hinweises auf die Patenterteilung: **15.09.2010**
(21) Anmeldenummer: 06705978.2
(22) Anmeldetag: 15.02.2006
(51) Int. Cl.: F16K 27/00, F16K 11/20

(54) **BAUSATZ UND WEGEVENTILSERIE**
KIT AND SERIES OF MULTIWAY VALVES
JEU DE PIECES DETACHEES ET SERIE DE DISTRIBUTEURS

(30) Priorität: 22.02.2005 DE 102005008069
(43) Veröffentlichungstag der Anmeldung: 14.11.2007
(73) Patentinhaber: Bosch Rexroth AG, 70184 Stuttgart (DE)
(72) Erfinder: STRAUSS, Klemens, 97833 Frammersbach (DE)
(74) Vertreter: Winter, Brandl, Fürniss, Hübner, Röss, Kaiser, Polte - Partnerschaft
(86) Internationale Anmeldenummer: PCT/DE2006/000269
(87) Internationale Veröffentlichungsnummer: WO 2006/089516

(56) Entgegenhaltungen:
- EP-A- 1 036 965
- DE-A1- 2 340 985
- GB-A- 851 764

## Beschreibung

Die Erfindung betrifft einen Bausatz zum Bau von Wegesitzventilen und eine Wegeventilserie, die aus einem derartigen Bausatz hergestellt ist.

Wegesitzventile werden eingesetzt, um einen Druckmittelströmungspfad leckagefrei abzusperren. In der EP 1 036 965 A1 ist ein 4/2-Wegesitzventil offenbart, bei dem in einem Ventilgehäuse zwei parallel angeordnete 2/2-Sitzventile aufgenommen sind. Die Betätigung dieser beiden Wegesitzventile erfolgt mittels eines gemeinsamen Elektromagneten, dessen Stößel ein waagebalkenartiges Übertragungselement auslenkt, über das dann die beiden Wegesitzventile umgeschaltet werden, um jeweils zwei der vier Anschlüsse miteinander zu verbinden.

Das Gehäuse ist exakt auf den vorliegenden Anwendungsfall ausgelegt und kann beispielsweise bei einem 4/3-Wegesitzventil nicht verwendet werden. Hierfür muss dann ein geeignetes Gehäuse mit der entsprechenden Kanalführung vorgesehen werden. Das heißt, soll eine Wegeventilserie gefertigt werden, die jeweils aus einer Vielzahl von 2/2-Wegeventilen zusammengesetzt sind, so muss für jeden Ventiltyp (4/3-, 4/2-, 3/3 ...) ein eigenes Ventilgehäuse entwickelt werden.

Demgegenüber liegt der Erfindung die Aufgabe zugrunde, eine Wegesitzventilserie mit geringem fertigungs- und montagetechnischen Aufwand aus einer Vielzahl von 2/2-Wegesitzventilen zusammenzusetzen.

Diese Aufgabe wird durch einen Bausatz mit der Merkmalskombination des Patentanspruchs 1 und durch eine

Wegeventilserie mit den Merkmalen des Patentanspruchs 12 gelöst.

Bei dem erfindungsgemäßen Bausatz wird ein für alle Wegesitzventile der Serie gleiches Gehäuse verwendet, an dem vier Anschlüsse sowie vier Aufnahmebohrungen für jeweils ein 2/2-Wegesitzventil ausgebildet sind. Zu dem Bausatz gehören des Weiteren eine Anzahl von in die Aufnahmebohrungen des Gehäuses einsetzbarer Blindbüchsen, über die die Druckmittelströmungspfade zu den bei den konkreten Wegesitzventilen nicht benötigten Anschlüsse absperrbar sind. Mit einem derartigen Gehäuse lassen sich dann mit vier 2/2-Wegesitzventilen beispielsweise ein 4/3-Wegesitzventil, mit zwei 2/2-Wegesitzventilen und zwei Blindbüchsen ein 3/3- oder 4/2-Wegesitzventil ausbilden, ohne dass eine Änderung des Ventilgehäuses erforderlich ist. Zur Herstellung dieses Ventilgehäuses ist nur eine Gußform erforderlich, so dass der Fertigungsaufwand gegenüber der herkömmlichen Lösung erheblich vereinfacht ist.

Die 2/2-Wegesitzventile werden vorzugsweise über einen Elektromagneten betätigt, wobei erfindungsgemäß jeweils zwei Wegesitzventile durch einen gemeinsamen Magneten betätigbar sind, so dass zu dem Bausatz noch eine Vielzahl von Magneten, vorzugsweise Schaltmagneten gehört.

Jeder dieser Magnete hat einen Stößel, gegen den die Ventilkörper der zugeordneten 2/2-Wegesitzventile unmittelbar oder mittelbar (über ein Übertragungselement) vorgespannt sind. Dabei wird es bevorzugt, diesen Stößel mit einer Stößelplatte auszuführen, an der die Ventilkörper der 2/2-Wegeventile anliegen.

Bei einem besonders bevorzugten Ausführungsbeispiel sind einige der Blindbüchsen als Blindfederbüchsen ausgeführt und haben eine Feder, die mittelbar oder unmittelbar an dem Stößel oder der Stößelplatte anliegt. Die Federkonstante dieser Blindbüchsenfeder ist dann vorzugsweise gleich groß wie diejenige einer Ventilfeder gewählt, über die der Ventilkörper in Richtung auf den Stößel vorgespannt ist.

Die Gehäuse des Bausatzes sind vorzugsweise etwa quader- oder würfelförmig ausgeführt, wobei die vier Anschlüsse an einer Stirnfläche sowie jeweils zwei Aufnahmebohrungen für die 2/2-Wegesitzventile oder die Blindbüchsen in den benachbarten Seitenflächen mündet. An diesen Seitenflächen wird dann jeweils ein Magnet befestigt, so dass diese einander gegenüberliegen.

Die Achsen der Aufnahmebohrungen verlaufen vorzugsweise parallel zueinander und liegen gleichmäßig verteilt auf einem gemeinsamen Teilkreis.

Die in jeweils einer der Seitenflächen des Gehäuses mündenden Aufnahmebohrungen sind vorzugsweise schräg versetzt mit Bezug zu den Seitenkanten des Gehäuses angeordnet. Das heißt, die Achsen der Aufnahmebohrungen liegen etwa in einer Diagonalen der Seitenflächen.

Bei einem sehr kompakt ausgebildeten Ausführungsbeispiel sind die Aufnahmebohrungen jeweils über einen Druckmittelströmungspfad mit einem Tank- oder einem Druckanschluss einerseits und andererseits über einen Druckmittelpfad mit einem Arbeitsanschluss verbunden. Dabei sind vorzugsweise die beiden einem der Arbeitsanschlüsse zugeordneten Aufnahmebohrungen über einen Verbindungskanal miteinander verbunden, in den der zum zugehörigen Anschluss führende Druckmittelströmungspfad einmündet. Es ist des Weiteren bevorzugt, wenn die einem Arbeitsanschluss zugeordneten Aufnahmebohrungen versetzt zueinander angeordnet sind und in jeweils einer der Seitenflächen münden.

Der erfindungsgemäße Bausatz mit einer Vielzahl von identischen Gehäusen, einer Vielzahl von 2/2-Wegesitzventilen, einer Vielzahl von Blindbüchsen und Blindfederbüchsen sowie einer Vielzahl von Schaltmagneten und dafür vorgesehenen Befestigungsflanschen kann durch Ventilelementeinsätze ergänzt werden, die in an die Anschlüsse angrenzende Kanäle einsetzbar sind. Durch derartige Ventilelementeinsätze kann beispielsweise ein Rückschlagventil oder eine Blende ausgebildet werden, die im Bereich des Druckanschlusses eingesetzt sind.

Sonstige vorteilhafte Weiterbildungen der Erfindung sind Gegenstand weiterer Unteransprüche.

Im Folgenden wird ein erfindungsgemäßer Bausatz anhand eines bevorzugten Ausführungsbeispiels näher erläutert.

Es zeigen:
Fig. 1 eine teilgeschnittene Draufsicht auf ein Wegesitzventil, das aus dem erfindungsgemäßen Bausatz zusammengesetzt ist;
Fig. 2 eine Seitenansicht eines Gehäuses des Bausatzes;
Fig. 3 und 4 Schnittdarstellungen des Gehäuses aus Fig. 2;
Fig. 5 eine Schnittdarstellung eines 2/2-Wegesitzventiles des Bausatzes;
Fig. 6 eine Schnittdarstellung einer Blindfederbüchse des Bausatzes;
Fig. 7 eine Schnittdarstellung einer Blindbüchse des Bausatzes;
Fig. 8 und 9 Ventilelementeinsätze des Bausatzes;
Fig. 10 eine Übersichtsdarstellung von Schaltbildern der Wegesitzventilserie;
Fig. 11 eine Schnittdarstellung des in Fig. 1 dargestellten 4/3-Wegesitzventils;
Fig. 12 eine Schnittdarstellung eines aus dem Bausatz zusammengesetzten 3/3-Wegesitzventils und
Fig. 13 eine Schnittdarstellung eines aus dem Bausatz hergestellten 4/2-Wegesitzventil.

Im Folgenden wird ein Ausführungsbeispiel eines Bausatzes beschrieben, mit dem unterschiedliche Wegesitzventile einer Ventilserie zusammengesetzt werden können.

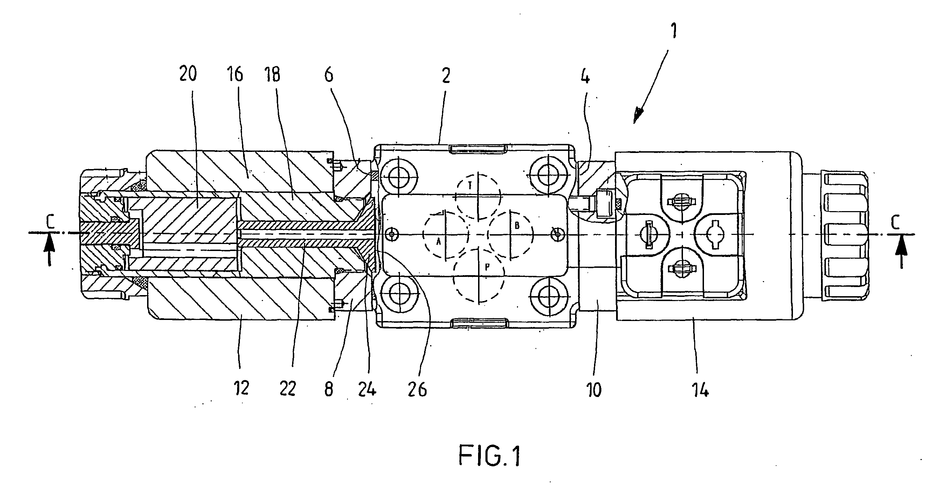

Fig. 1 zeigt einen Teilschnitt eines 4/3-Wegesitzventils 1 eines derartigen Ventilsatzes. Das Wegeventil 1 hat ein mittiges Gehäuse 2, das beim dargestellten Ausführungsbeispiel einen quaderförmigen Aufbau hat. An der in Fig. 1 vom Betrachter abgewandten, parallel zur Zeichenebene verlaufenden Unterseite des Gehäuses 2 sind vier gestrichelt angedeutete Anschlüsse, ein Druckanschluss P, ein Tankanschluss T sowie zwei Arbeitsanschlüsse A und B ausgebildet. An zwei Seitenflächen 4, 6 sind zwei Befestigungsflansche 8, 10 befestigt, in die jeweils ein Schaltmagnet 12, 14 eingeschraubt ist. In Fig. 1 ist der linke Schaltmagnet 12 im Schnitt dargestellt. Dieser hat einen herkömmlichen Grundaufbau mit einem Spulenkörper 16, der ein Polrohr 18 umgreift. In diesem ist ein Anker 20 axial verschiebbar geführt. Dieser steht in Wirkverbindung mit einem Stößel 22, der einerseits am Anker 20 anliegt oder mit diesem verbunden ist und andererseits einen aus dem Polrohr 18 axial vorstehenden und radial erweiterten Endabschnitt hat, der als Stößelplatte 24 ausgebildet ist. Diese taucht in eine Stirnausnehmung an den benachbarten Seitenflächen 4, 6 des Gehäuses 2 ein und liegt mit ihrer Stirnfläche 26 an Übertragungselementen zweier 2/2-Wegesitzventile an, so dass diese bei Bestromung des Elektromagneten umgeschaltet werden. Die Stößelplatte 24 ist so ausgelegt, dass über sie zwei der vier 2/2-Wegesitzventile betätigbar sind.

Der an der gegenüberliegenden Stirnfläche 4 befestigte Schaltmagnet 14 hat im Prinzip den gleichen Aufbau wie der Magnet 12, so dass auf weitere Ausführungen verzichtet werden kann.

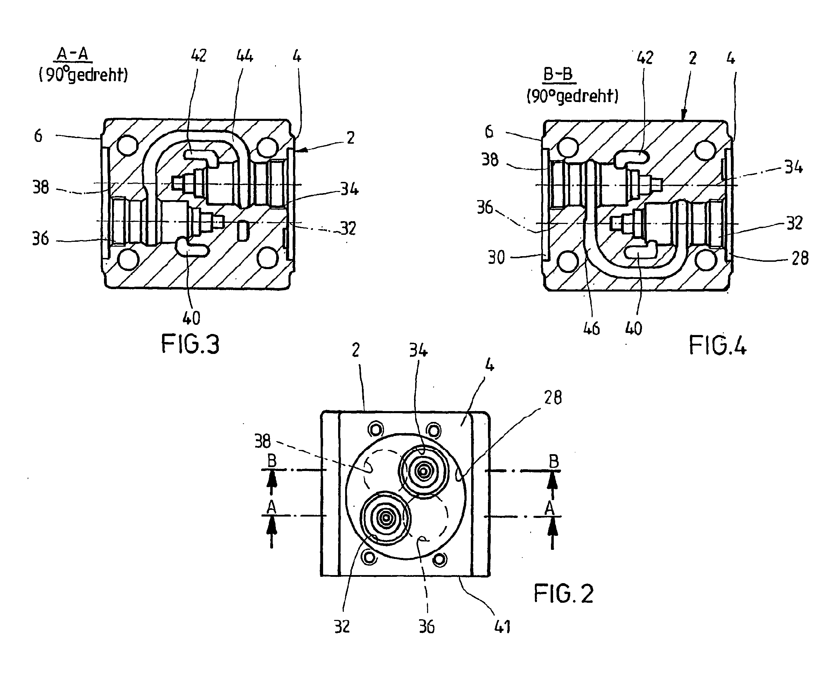

Der Aufbau des Gehäuses wird im Folgenden anhand der Fig. 2, 3 und 4 erläutert, wobei Fig. 2 eine Ansicht der senkrecht auf der Zeichenebene in Fig. 1 stehenden Seitenfläche 4 zeigt, während die Fig. 3 und 4 Schnitte entlang der Linien A-A und B-B darstellen, wobei diese Schnittdarstellungen um 90° gedreht sind, so dass die Seitenfläche 4 in den Darstellungen gemäß Fig. 3 und 4 rechts angeordnet sind.

Wie insbesondere den Fig. 3 und 4 entnehmbar ist, sind in diesen Stirnflächen 4, 6 jeweils Stirnausnehmungen 28, 30 ausgebildet, in die die Stößelplatten 24 der beiden einander gegenüber liegenden Schaltmagnete 12, 14 eintauchen. Die beiden Befestigungsflansche sitzen dabei auf den die Stirnausnehmungen 28, 30 umgebenden Bereichen der Seitenflächen 4, 6 auf.

In der Bodenfläche der Stirnausnehmung 28 münden zwei Aufnahmebohrungen 32, 34 (durchgezogen in Fig. 2) und der in Fig. 2 nicht sichtbaren Stirnausnehmung 30 münden zwei weitere, in Fig. 2 gestrichelt dargestellte Aufnahmebohrungen 36, 38. Gemäß Fig. 2 sind die jeweils in einer Stirnausnehmung 28, 30 mündenden Aufnahmebohrungen 32, 34; 36, 38 schräg versetzt zueinander angeordnet, d.h. die Verbindungslinie der jeweils zusammengehörigen Aufnahmebohrungen 32, 34, 36, 38 verläuft schräg zu der unten liegenden Stirnfläche 41, in der die Anschlüsse P, T, A, B ausgebildet sind. Die beiden in der Stirnausnehmung 30 mündenden Montagebohrungen 36, 38 sind ihrerseits gegenüber den in der Stirnausnehmung 28 mündenden Aufnahmebohrungen 32, 34 um annähernd 90° versetzt, so dass in der Darstellung gemäß Fig. 2, die senkrecht zur Zeichenebene verlaufenden Achsen ein Rechteck bilden, so dass in den Schnittebenen A-A und B-B jeweils zwei Aufnahmebohrungen 32, 38 und 34, 36 nebeneinander zu liegen kommen.

Gemäß den Fig. 3 und 4 haben die Aufnahmebohrungen 32, 34, 36, 38 jeweils eine identische Form, die derjenigen entspricht, wie sie üblicherweise bei Ventilgehäusen zur Aufnahme von Einbauventilen verwendet werden, so dass auf eine ausführliche Beschreibung der Kontur dieser Aufnahmebohrungen verzichtet werden kann.

Der in Fig. 1 angedeutete Druckanschluss P ist über einen sich verzweigenden Druckkanal 40 (Fig. 3, 4) mit einem jeweils im Gehäuseinneren liegenden Bereich der Aufnahmebohrungen 32, 36 verbunden. Vom Tankanschluss T

(Fig. 1) erstreckt sich ein Tankkanal 42 zu entsprechenden Abschnitten der Aufnahmebohrungen 34, 38.

Die mittleren Bereiche der Aufnahmebohrungen 34, 36 und 32, 38 sind jeweils über einen U-förmigen Verbindungskanal 44, 46 miteinander verbunden, wobei der Verbindungskanal 44 über einen nicht dargestellten Arbeitskanal mit dem Arbeitsanschluss B und der U-förmige Verbindungskanal 46 über einen ebenfalls nicht dargestellten Arbeitskanal mit dem Arbeitsanschluss A verbunden ist. Demgemäß ist die Aufnahmebohrung 32 mit dem Arbeitsanschluss A und dem Druckanschluss P, die Aufnahmebohrung 38 mit dem Arbeitsanschluss A und dem Tankanschluss T, die Aufnahmebohrung 34 mit dem Arbeitsanschluss B und dem Tankanschluss und die Aufnahmebohrung 36 mit dem Druckanschluss P und dem Arbeitsanschluss B verbunden, so dass durch Einsetzen der 2/2-Wegesitzventile die entsprechenden Druckmittelströmungspfade geöffnet oder abgesperrt werden können.

Gemäß den vorstehenden Ausführungen münden die mit dem Druck- oder dem Tankanschluss verbundenen Kanäle in den weiter innen im Gehäuse 4 liegenden Bereichen der Aufnahmebohrungen 32, 34, 36, 38 ein, während die mit den Arbeitsanschlüssen A, B verbundenen Kanäle weiter außen, zu den Seitenflächen 4 bzw. 6 hin in diese Aufnahmebohrungen 32, 34, 36, 38 einmünden.

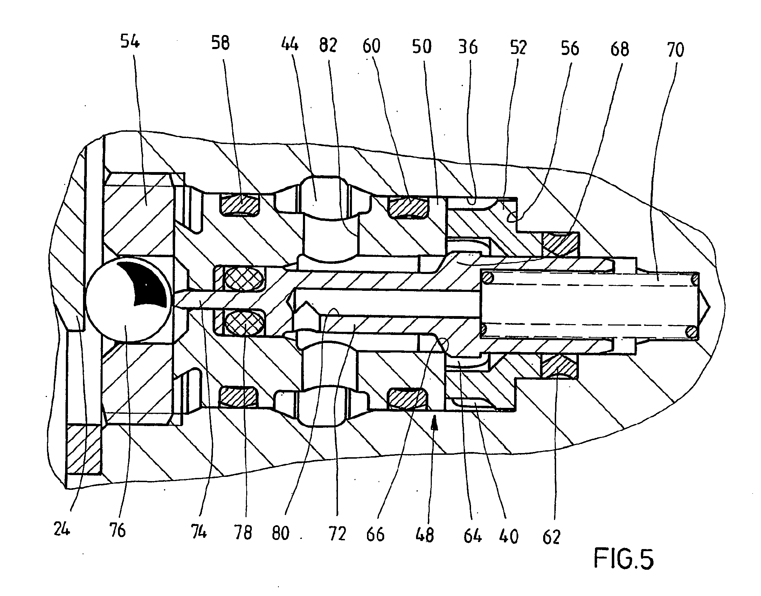

Zum erfindungsgemäßen Bausatz gehören eine Vielzahl von 2/2-Wegesitzventilen, deren Grundaufbau herkömmlichen Konstruktionen entspricht, so dass hier nur die wesentlichen Bauelemente beschrieben werden. Fig. 5 zeigt eine vergrößerte Darstellung der Aufnahmebohrung 36, in die ein 2/2-Wegesitzventil 48 eingesetzt ist. Dieses hat ein mehrteiliges patronenförmiges Ventilgehäuse mit einer Büchse 50 und einem daran anschließenden Endstück 52, die gemeinsam über eine in die Aufnahmebohrung 36 eingeschraubte Befestigungsschraube 54 gegen eine Schulter 56 vorgespannt sind. Am Außenumfang der Büchse 50 sind zwei Dichtungen 58, 60 vorgesehen, zwischen denen der Kanal 44 einmündet, der gemäß den vorliegenden Ausführungen mit dem Arbeitsanschluss B verbunden ist. Zwischen der Ringstirnfläche des büchsenförmigen Endstücks 52 und einer weiteren Schulter der Aufnahmebohrung 36 ist eine weitere Dichtung 62 vorgesehen. Der Druckkanal 40 mündet dabei in einem zwischen dem Endstück 52 und der Innenumfangswandung der Aufnahmebohrung 36 ausgebildeten Ringraum ein, der über Durchbrüche 64 mit dem vom Endstück 52 umgriffenen Innenraum verbunden ist.

An einer dem Endstück 52 zuweisenden Innenumfangskante der Büchse 50 ist ein Ventilsitz 66 ausgebildet, gegen den ein Ventilkegel 68 mittels einer an der in Fig. 5 rechten Stirnfläche der Aufnahmebohrung 36 abgestützten Ventilfeder 70 vorgespannt ist.

Am Ventilkegel 68 ist ein Axialvorsprung 72 ausgebildet, dessen radial zurückgestufter Endabschnitt 74 in der dargestellten Grundposition des 2/2-Wegesitzventils stirnseitig etwas aus der Büchse 50 hervorragt und an einer Kugel 76 anliegt oder in Anlage bringbar ist. Diese Kugel 76 dient als Übertragungselement, über das die Axialverschiebung der Stößelplatte 24 auf den Ventilkegel 68 übertragen wird. Zwischen dem Außenumfang des Endabschnitts 74 und der Innenumfangswandung der Büchse 50 ist eine weitere Dichtung 78 angeordnet. Der Axialvorsprung 72 ist mit einer Winkelbohrung 80 versehen, die einerseits im Bereich einer oder mehrerer Querbohrungen 82 der Büchse 50 und andererseits in der rechten Stirnfläche des Ventilkegels 68 mündet. Der Mündungsbereich ist in Radialrichtung erweitert und bildet einen Aufnahmeabschnitt, in den das in Fig. 5 linke Ende der Ventilfeder 70 eintaucht. Über die Winkelbohrung 80 ist somit die in Fig. 5 rechte Stirnfläche des Ventilkegels 68 mit dem Druck im Kanal 44, d.h. dem Druck am Arbeitsanschluss B in Schließrichtung beaufschlagt.

Bei dem in Fig. 1 dargestellten Ausführungsbeispiel liegt auch das in die Aufnahmebohrung 38 (Fig. 4) eingesetzte 2/2-Wegesitzventil 48 mit seiner Kugel 76 an der Stößelplatte 24 an, so dass bei Betätigung des Elektromagneten 16 die in den beiden Aufnahmebohrungen 36 und 38 aufgenommenen 2/2-Wegesitzventile 48 in ihre Öffnungsstellung gebracht werden und entsprechend die Verbindung von P nach B und die Verbindung von A nach T aufgesteuert wird. Das heißt, das Druckmittel wird zu dem an den Arbeitsanschluss B angeschlossenen Verbraucher gefördert und strömt über den anderen Arbeitsanschluss A zum Tank T ab.

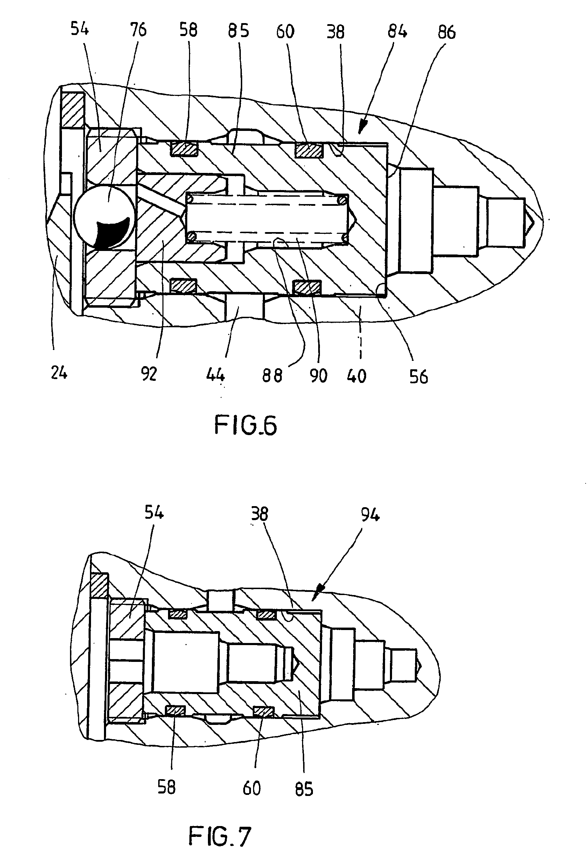

Durch Einsetzen von vier 2/2-Wegesitzventilen 48 lässt sich mit dem Gehäuse 2 des vorbeschriebenen Ausführungsbeispiels ein 4/3-Wegesitzventil ausbilden. Dies wird später noch näher erläutert. Soll nun ein Wegesitzventil mit weniger Schaltstellungen und/oder Anschlüssen ausgebildet werden, so wird anstelle eines oder mehrerer 2/2-Wegesitzventilen 48 eine zum Bausatz gehörende Blindfederbüchse gemäß Fig. 6 oder Blindbüchse gemäß Fig. 7 eingesetzt.

Wird die Blindfederbüchse beispielsweise in die Aufnahmebohrung 38 eingesetzt, so wird die Verbindung zwischen den darin einmündenden Druckmittelströmungspfaden, d.h. im vorliegenden Fall die Verbindung zwischen dem Druckkanal 40 (gestrichelt in Fig. 6) und dem mit dem Arbeitsanschluss B verbundenen Verbindungskanal 44 abgesperrt. Zur Abdichtung sind am Außenumfang eines einseitig geschlossenen Blindbüchsenkörpers 85 der Blindfederbüchse 84 Dichtungen 58, 60 vorgesehen. Die in Fig. 6 rechte Stirnfläche 86 der Blindfederbüchse ist geschlossen. In der linken Stirnfläche mündet eine Sacklochbohrung 88, die nach links (Ansicht nach Fig. 6) hin erweitert ist. Ähnlich wie das 2/2-Wegesitzventil 48 wird die Blindfederbüchse 84 über eine in die Aufnahmebohrung 38 eingeschraubte Befestigungsschraube 54 gegen die Schulter 56 gedrückt und somit in Axialrichtung fixiert. Die Besonderheit der Blindfederbüchse 84 liegt darin, dass in der Sacklochbohrung 88 eine Feder 90 abgestützt ist, die ein Gleitstück 92 gegen die Befestigungsschraube 54 vorspannt, in deren Durchgangsbohrung wiederum eine Kugel 76 axial verschiebbar geführt ist. Diese Kugel steht in Anlage an der Stößelplatte 24, so dass bei einer Betätigung des Schaltmagneten 14 die Kugel 76 und damit das Gleitstück 92 gegen die Kraft der Feder 90 verschoben wird. Die Federkonstante dieser Feder 90 ist entsprechend der Federkonstante der Ventilfeder 70 so ausgelegt, dass die Stößelplatte 24 symmetrisch belastet ist und nicht mit einem Kippmoment beaufschlagt wird. Dies wäre dann der Fall, wenn die Blindfederbüchse 34 ohne Federelement ausgeführt wird. Ein derartiges Element des Bausatzes ist in Fig. 7 dargestellt.

Diese Blindbüchse 94 hat keine Federfunktion, d.h. die Feder 90 und das Gleitstück 92 werden einfach weggelassen und der Blindbüchsenkörper 85 ohne diese Bauelemente über die Befestigungsschraube 54 in Axialrichtung in der Aufnahmebohrung - beispielsweise 38 - axial gesichert. Das heißt, gemäß Fig. 7 ist die Blindbüchse 94 im wesentlichen nur durch den Blindbüchsenkörper 85 gebildet, an den die beiden Ringdichtungen 58, 60 angeordnet sind. Die Blindbüchse 94 wird dann eingesetzt, wenn an einer Stirnfläche des Gehäuses kein Schaltmagnet 12, 14 angeordnet ist, so daß die beiden Aufnahmebohrungen dieser Seite über Blindbüchsen 94 gemäß Fig. 7 verschlossen werden.

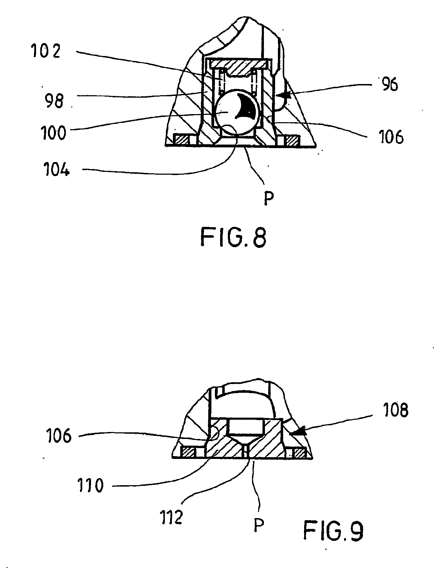

Zu dem erfindungsgemäßen Bausatz gehören noch weitere Ventilelemente, die beispielsweise in die an die Anschlüsse P, T, A, B angrenzenden Kanäle eingesetzt werden können. Diese Ventilelemente sind gemäß den Fig. 8 und 9 büchsenförmig ausgebildet. Fig. 8 zeigt ein als Rückschlagventil 96 ausgebildetes Ventilelement, bei dem in einer Rückschlagventilbüchse 98 ein bei diesem Ausführungsbeispiel kugelförmiger Schließkörper 100 aufgenommen ist. Dieser wird über eine Schließfeder 102 gegen einen Sitz 104 vorgespannt. Zur Aufnahme der Rückschlagventilbüchse 98 ist der an den Druckanschluss P anschließende Kanal zunächst mit einem zylindrischen Bohrungsabschnitt 106 ausgebildet, in den die Rückschlagventilbüchse 98 einsetzbar ist.

Bei dem in Fig. 9 dargestellten Ausführungsbeispiel eines Ventilelementes ist anstelle des Rückschlagventils 96 eine Blende 108 eingesetzt, die aus einem Blendenkörper 110 mit einer Blendenbohrung 112 besteht.

Mit den vorbeschriebenen Bauelementen des erfindungsgemäßen Bausatzes, d.h. den Gehäusen 2, den Schaltmagneten 12, 14, den Befestigungsflanschen 8, 10 den 2/2-Wegesitzventilen 48, den Blindbüchsenkörpern 85, den Federn 90, den Gleitstücken 92 sowie den in den Anschlussbereich einsetzbaren Ventilelementen, wie beispielsweise den Rückschlagventilen 96 und den Blenden 108 und im Folgenden noch beschriebenen Abschlussplatten 114 für nicht belegte Stirnflächen 4, 6 kann eine Vielzahl von Varianten einer Wegesitzventilserie ausgebildet werden.

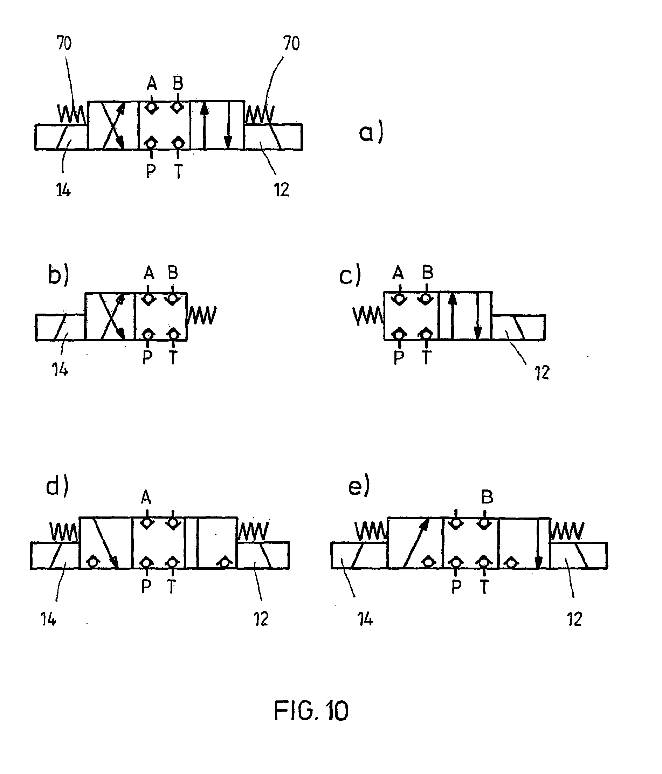

Fig. 10 zeigt einige Schaltsymbole von Wegesitzventilen einer derartigen Ventilserie. So lässt sich beispielsweise aus dem Bausatz ein 4/3-Wegesitzventil herstellen, bei dem in den Aufnahmebohrungen 32, 34, 36, 38 jeweils ein 2/2-Wegesitzventil 48 aufgenommen ist. Jeweils zwei der 2/2-wegesitzventile 48 lassen sich dann mit einem der Schaltmagnete 12, 14 betätigen, um die entsprechenden Schaltstellungen einzunehmen, so dass bei Betätigung des Schaltmagnets 14 der Druckanschluss P mit dem Arbeitsanschluss B und der Arbeitsanschluss A mit dem Tankanschluss T verbunden ist, während bei Betätigung des Schaltmagneten 12 der Druckanschluss P mit dem Arbeitsanschluss A und der Arbeitsanschluss B mit dem Tankanschluss T verbunden ist. Die in Fig. 10a) dargestellten Federn sind durch die Ventilfedern 70 der 2/2-Wegesitzventile 48 gebildet. In der federvorgespannten Grundposition sind die Anschlüsse leckagefrei abgesperrt.

In den Fig. 10b) und 10c) ist das Wegesitzventil als 4/2-Wegesitzventil ausgeführt, d.h. es ist nur eine Schaltposition realisiert, so dass entsprechend auch nur ein Schaltmagnet verwendet wird. Bei dem Schaltbild 10b) ist nur der Schaltmagnet 14 angesetzt, so dass entsprechend in die Aufnahmebohrungen 36, 38 2/2-Wegesitzventile eingesetzt sind, während in die beiden verbleibenden Aufnahmebohrungen 32, 34 an der Stirnfläche 4 Blindbüchsen gemäß Fig. 7 eingesetzt sind. Durch Betätigen des Wegeventils 12 wird dann die Verbindung von P nach B und von A nach T aufgesteuert.

Bei dem in Fig. 10c) dargestellten Ausführungsbeispiel ist nur der Schaltmagnet 12 angeflanscht, so dass entsprechend die Aufnahmebohrungen 32, 34 mit 2/2-Wegesitzventilen ausgeführt sind und in die beiden in der Stirnfläche 6 mündenden Aufnahmebohrungen 36, 38 Blindbüchsen 94 eingesetzt sind. Durch Bestromen des Magneten 12 kann die Verbindung von P nach A und von B nach T aufgesteuert werden.

Fig. 10 zeigt als 3/3-Wegesitzventile ausgeführte Lösungen. Aufgrund der zwei Schaltpositionen sind die Schaltmagnete 12, 14 vorgesehen und bei der Variante 10d) der Anschluss B abgesperrt, indem in die mit diesem verbundenen Aufnahmebohrungen 36 und 34 Blindfederbüchsen 84 und in die beiden etwa diametral zueinander angeordneten Aufnahmebohrungen 38 und 32 jeweils ein 2/2-Wegesitzventil 48 eingesetzt ist. Das heißt, in jeder Stirnfläche 2, 4 ist jeweils ein 2/2-Wegesitzventil 48 und eine Blindfederbüchse 84 angeordnet, so dass die beiden Schaltmagnete 12, 14 beim Umschalten symmetrisch belastet sind. Durch Umschalten wird die Verbindung von P nach A oder von A nach T geöffnet.

Bei dem in Fig. 10e) dargestellten Ausführungsbeispiel sind die mit dem Anschluss A verbundenen Druckmittelströmungspfade abgesperrt. Entsprechend sind dann Blindfederbüchsen 84 in die Aufnahmebohrungen 32 und 38 eingesetzt. In die beiden verbleibenden Aufnahmebohrungen 34, 36 sind 2/2-Wegesitzventile 48 eingesetzt, so dass die Schaltmagnete 12, 14 wiederum gleichmäßig belastet sind und beim Umschalten entweder die Verbindung von P nach B oder B nach T aufsteuern.

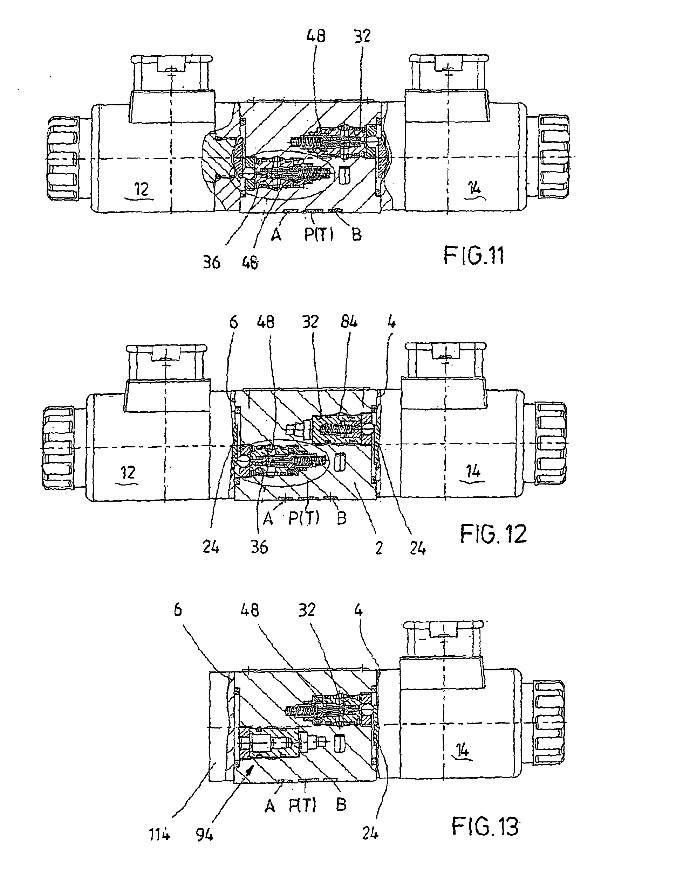

Die Fig. 11, 12 und 13 zeigen konkrete Ausführungen der in Fig. 10 dargestellten Varianten. Fig. 11 zeigt einen Schnitt durch das 4/3-Wegesitzventil 1 aus Fig. 1, wobei die Schnittebene entlang der Linie C-C in Fig. 1 liegt. Mit diesem Schnitt werden die näher zu den Anschlüssen A, B, P, T liegenden Aufnahmebohrungen 36, 32 erfasst, d.h. die Schnittebene verläuft senkrecht zur Zeichenebene in den Fig. 3 und 4. In sämtliche Aufnahmebohrungen, auch in die im Schnitt gemäß Fig. 11 nicht sichtbaren Aufnahmebohrungen 34, 38 sind 2/2-Wegesitzventile 48 eingesetzt, wobei jeweils zwei von einem der beiden Schaltmagneten 12 oder 14 betätigbar sind.

Fig. 12 zeigt die konkrete Ausführung des Schaltbildes gemäß Fig. 10e) - dieses Wegesitzventil ist als 4/2-Wegesitzventil ausgeführt. Der Schnitt verläuft wie bei Fig. 11. In die mit dem Anschluss A verbundene Aufnahmebohrung 32 und die im Schnitt nicht sichbare Aufnahmebohrung 38 sind jeweils Blindfederbüchsen 34 eingesetzt, während in die beiden anderen Aufnahmebohrungen 36, 34 2/2-Wegesitzventile eingesetzt sind. Das heißt, in jeder Stirnfläche 4, 6 des Gehäuses 2 liegen die Kugeln 76 eines 2/2-Wegesitzventils 48 und einer Blindfederbüchse 84, so dass auch bei dieser Variante die Stösselplatte 24 symmetrisch belastet ist.

Fig. 13 zeigt schließlich ein 4/3-Wegesitzventil, das die konkrete Ausführung des in Fig. 10b) dargestellten Schaltsymbols ist. Bei diesem Ventiltyp der Serie sind in den Aufnahmebohrungen 32 und 34 (letztere nicht sichtbar) 2/2-Wegesitzventile 48 aufgenommen, die verbleibenden Aufnahmebohrungen 34, 38 sind mit jeweils einer Blindbüchse 94 abgesperrt. Entsprechend ist bei diesem Ausführungsbeispiel die Druckmittelverbindung zwischen P und A und B und T nicht möglich. Die die Druckmittelverbindung von P nach B und von A nach T aufsteuernden 2/2-Wegesitzventile sind beide im Bereich der Stirnseite 4 angeordnet, so dass die Stößelplatte 24 des an dieser Stirnfläche 4 festgeflanschten Schaltmagnets 14 symmetrisch belastet ist. In den gegenüberliegenden Positionen müssen keine Blindfederbüchsen vorgesehen sein, da an dieser Stirnfläche 6 kein Schaltmagnet vorgesehen ist. Diese Stirnfläche 6 ist mit einer Abschlussplatte 114 abgedeckt. Diese gehört somit auch zum erfindungsgemäßen Bausatz.

Mit einem derartigen Bausatz lassen sich mit minimalem Aufwand eine Vielzahl von Ventilvarianten einer Wegesitzventilserie ausbilden und auch auf einfache Weise umrüsten.

Offenbart sind ein Bausatz zum Bau einer Wegesitzventilserie und einige Wegesitzventile einer derartigen Serie. Der Bausatz hat ein bei allen Ventiltypen der Serie eingesetztes Gehäuse, an dem vier Anschlüsse und vier Aufnahmebohrungen ausgebildet sind. Je nach Ventiltyp werden in diese Aufnahmebohrungen entweder 2/2-Wegesitzventile oder Blindbüchsen eingesetzt, so dass durch entsprechende Kombination der vorbeschriebenen Bauelemente beispielsweise 4/2-, 3/3- oder 3/2-Wegesitzventile ausgeführt werden können.

### Bezugszeichenliste:

- 1: Wegesitzventil
- 2: Gehäuse
- 4: Seitenfläche
- 6: Seitenfläche
- 8: Befestigungsflansch
- 10: Befestigungsflansch
- 12: Schaltmagnet
- 14: Schaltmagnet
- 16: Spulenkörper
- 18: Polrohr
- 20: Anker
- 22: Stößel
- 24: Stößelplatte
- 26: Stirnfläche
- 28: Stirnausnehmung
- 30: Stirnausnehmung
- 32: Aufnahmebohrung
- 34: Aufnahmebohrung
- 36: Aufnahmebohrung
- 38: Aufnahmebohrung
- 40: Druckkanal
- 41: Stirnfläche
- 42: Tankkanal
- 44: Verbindungskanal
- 46: Verbindungskanal
- 48: 2/2-Wegesitzventil
- 50: Büchse
- 52: Endstück
- 54: Befestigungsschraube
- 56: Schulter
- 58: Dichtungen
- 60: Dichtungen
- 62: Dichtungen
- 64: Durchbruch
- 66: Ventilsitz
- 68: Ventilkegel
- 70: Ventilfeder
- 72: Axialvorsprung
- 74: Endabschnitt
- 76: Kugel
- 78: Dichtung
- 80: Winkelbohrung
- 82: Querbohrung
- 84: Blindfederbüchse
- 85: Blindbüchsenkörper
- 86: Stirnfläche
- 88: Sacklochbohrung
- 90: Feder
- 92: Gleitstück
- 94: Blindbüchse
- 96: Rückschlagventil
- 98: Rückschlagventilbüchse
- 100: Schließkörper
- 102: Schließfeder
- 104: Sitz
- 106: Bohrungsabschnitt
- 108: Blende
- 110: Blendenkörper
- 112: Blendenbohrung
- 114: Abschlussplatte

## Patentansprüche

1. Bausatz zum Bau einer Wegesitzventilserie mit unterschiedlichen Wegesitzventilen, die bis zu vier Anschlüsse und bis zu drei Schaltpositionen aufweisen, mit einem Gehäuse (2) und einer Vielzahl von in das Gehäuse (2) einsetzbaren 2/2-Wegesitzventilen (48), wobei das Gehäuse (2) mit vier Anschlüssen (P, T, A, B) ausgebildet ist, **dadurch gekennzeichnet, dass** das Gehäuse mit vier Aufnahmebohrungen (32, 34, 36, 38) für jeweils ein 2/2-Wegesitzventil (48) ausgebildet ist mit einer Vielzahl von in die Aufnahmebohrungen (32, 34, 36, 38) einsetzbarer Blindbüchsen (84, 94) zum Absperren nicht benötigter Druckmittelströmungspfade.

2. Bausatz nach Patentanspruch 1, wobei jeweils zwei 2/2-Wegesitzventile durch einen gemeinsamen Schaltmagneten (12, 14) betätigbar sind.

3. Bausatz nach Patentanspruch 2, wobei der Schaltmagnet (12, 14) einen Stößel (22) hat, gegen den ein Ventilkörper (68) eines 2/2-Wegesitzventil (48) mittelbar oder unmittelbar über eine Ventilfeder (70) vorgespannt ist.

4. Bausatz nach Patentanspruch 3, wobei der Stößel (22) eine Stößelplatte (24) hat, an der mehrere Ventilkörper (68) mittelbar oder unmittelbar in Anlage bringbar sind.

5. Bausatz nach Patentanspruch 3 oder 4, wobei einige der Blindbüchsen als Blindfederbüchsen (84) ausgeführt sind und eine mittelbar oder unmittelbar gegen den Stößel (22) vorgespannte Feder (90) haben, deren Federkonstante derjenigen der Ventilfeder (70) entspricht.

6. Bausatz nach einem der vorhergehenden Patentansprüche, wobei das Gehäuse (2) etwa quader- oder würfelförmig ausgebildet ist und die vier Anschlüsse (P, T, A, B) an einer Stirnfläche des Gehäuses (2) sowie jeweils zwei Aufnahmebohrungen (32, 34; 36, 38) in den beiden benachbarten Seitenflächen (4, 6) des Gehäuses (2) münden, an denen jeweils ein Schaltmagnet (12, 14) befestigbar ist.

7. Bausatz nach Patentanspruch 6, wobei die Achsen der Aufnahmebohrungen (32, 34, 36, 38) parallel verlaufen und in Achsrichtung gesehen ein Rechteck oder Quadrat einschließen, wobei die in den jeweiligen Seitenflächen (4, 6) mündenden Aufnahmebohrungen (32, 34; 36, 38) schräg versetzt mit Bezug zu einer benachbarten Umfangskante des Gehäuses (2) angeordnet sind.

8. Bausatz nach einem der vorhergehenden Patentansprüche, wobei jede Aufnahmebohrung (32, 34, 36, 38) über einen Druckmittelströmungspfad mit dem Tankanschluss (T) oder dem Druckanschluss (P) einerseits und andererseits über einen anderen Druckmittelströmungspfad mit einem der Arbeitsanschlüsse (A, B) verbunden ist.

9. Bausatz nach Patentanspruch 8, wobei die beiden einem Arbeitsanschluss (A, B) zugeordneten Aufnahmebohrungen (32, 38; 34, 36) versetzt zueinander in den gegenüberliegenden Seitenflächen (2, 4) münden und über einen Verbindungskanal (44, 46) miteinander verbunden sind, in den der zum zugehörigen Anschluss (A, B) führende Druckmittelströmungspfad einmündet.

10. Bausatz nach einem der vorhergehenden Patentansprüche mit Ventilelementeinsätzen, beispielsweise einem Rückschlagventil (36) oder einer Blende (108) zum Einsetzen in an die Anschlüsse (P, T, A, B) angrenzende Bohrungsabschnitte (106).

11. Bausatz nach einem der Patentansprüche 2 bis 10, mit Befestigungsflanschen (8, 10) für die Schaltmagnete (12, 14).

12. Wegeventilserie mit einer Vielzahl von unterschiedlichen Wegeventilen, zusammengesetzt aus einem Bausatz gemäß einem der vorhergehenden Patentansprüche.

## Claims

1. Kit for making a directional seat valve series with different directional seat valves which have up to four ports and up to three switch positions, with a housing (2) and a plurality of 2/2-way seat valves (48) which are insertable into the housing (2), wherein the housing (2) is configured to have four ports (P, T, A, B), **characterised in that** the housing is configured to have four receiving bores (32, 34, 36, 38), each for one 2/2-way seat valve (48), with a plurality of blind bushes (84, 94) which are insertable into the receiving bores (32, 34, 36, 38) for shutting off pressure medium flow paths that are not required.

2. Kit according to patent claim 1, wherein two 2/2-way seat valves in each case are operable by a common switching solenoid (12, 14).

3. Kit according to patent claim 2, wherein the switching solenoid (12, 14) has a ram (22) towards which a valve body (68) of a 2/2-way seat valve (48) is directly or indirectly biased via a valve spring (70).

4. Kit according to patent claim 3, wherein the ram (22) has a ram plate (24) with which a plurality of valve bodies (68) may be directly or indirectly brought into contact.

5. Kit according to patent claim 3 or 4, wherein some of the blind bushes are in the form of blind spring bushes (84) and have a spring (90) which is directly or indirectly biased towards the ram (22) and the spring constant of which corresponds to that of the valve spring (70).

6. Kit according to be any one of the preceding patent claims, wherein the housing (2) is of an approximately cuboid or cubic configuration and the four ports (P, T, A, B) open onto an end face of the housing (2) and two receiving bores (32, 34; 36, 38) in each case open onto the two adjacent side faces (4, 6) of the housing (2), to each of which side faces (4, 6) a switching solenoid (12, 14) can be fastened.

7. Kit according to patent claim 6, wherein the axes of the receiving bores (32, 34, 36, 38) are parallel and, viewed in the axial direction, enclose a rectangle or square, wherein the receiving bores (32, 34; 36, 38) opening onto the respective side faces (4, 6) are arranged diagonally offset in relation to an adjacent peripheral edge of the housing (2).

8. Kit according to any one of the preceding patent claims, wherein each receiving bore (32, 34, 36, 38) is connected via a pressure medium flow path to the tank port (T) or the pressure port (P) on one side and on the other side via another pressure medium flow path to one of the working ports (A, B).

9. Kit according to patent claim 8, wherein the two receiving bores (32, 38; 34, 36) associated with a working port (A, B) open into the opposite side faces (2, 4) in offset relationship to each other and are connected to each other via a connecting channel (44, 46) into which the pressure medium flow path leading to the associated port (A, B) opens.

10. Kit according to any one of the preceding patent claims with valve element inserts, for example a check valve (36) or an orifice plate (108) for insertion into bore portions (106) adjoining the ports (P, T, A, B).

11. Kit according to any one of patent claims 2 to 10, having fastening flanges (8, 10) for the switching solenoids (12, 14).

12. Directional valve series with a plurality of different directional valves, composed of a kit in accordance with any one of the preceding patent claims.

## Revendications

1. Jeu de pièces détachées destiné à la construction d'une série de distributeurs à siège comprenant différents distributeurs à siège, présentant jusqu'à quatre raccords et jusqu'à trois positions de commutation, avec un carter (2) et une pluralité de distributeurs à siège à 2/2 voies (48) à mettre en place dans le carter (2), ledit carter (2) étant réalisé avec quatre raccords (P, T, A, B), **caractérisé en ce que** le carter est réalisé avec quatre alésages de réception (32, 34, 36, 38), chacun pour un distributeur à siège à 2/2 voies (48) avec une pluralité de douilles borgnes (84, 94) à mettre en place dans les alésages de réception (32, 34, 36, 38) pour fermer les voies d'écoulement non nécessitées de fluide sous pression.

2. Jeu de pièces détachées selon la revendication 1, où deux distributeurs à siège à 2/2 voies peuvent respectivement être actionnés par un aimant de commutation (12, 14) commun.

3. Jeu de pièces détachées selon la revendication 2, où l'aimant de commutation (12, 14) est pourvu d'un poussoir (22) contre lequel un corps de distributeur (68) d'un distributeur à siège à 2/2 voies (48) est précontraint directement ou indirectement au moyen d'un ressort de distributeur.

4. Jeu de pièces détachées selon la revendication 3, où le poussoir (22) est pourvu d'une plaque de poussoir (24) contre laquelle plusieurs corps de distributeur (68) peuvent être directement ou indirectement amenés en butée.

5. Jeu de pièces détachées selon la revendication 3 ou la revendication 4, où quelques-unes des douilles borgnes sont exécutées comme douilles borgnes à ressort (84) et sont pourvues d'un ressort (90) précontraint directement ou indirectement contre le poussoir (22) (90), dont la constante de ressort correspond à celle du ressort de distributeur (70).

6. Jeu de pièces détachées selon l'une des revendications précédentes, où le carter (2) est réalisé sensiblement en forme de parallélépipède ou de cube et où les quatre raccords (P, T, A, B) débouchent sur une surface frontale du carter (2) ainsi que deux alésages de réception (32, 34 ; 36, 38) respectivement dans les deux surfaces latérales adjacentes (4, 6) du carter (2), sur chacune desquelles un aimant de commutation (12, 14) peut être fixé.

7. Jeu de pièces détachées selon la revendication 6, où les axes des alésages de réception (32, 34, 36, 38) s'étendent parallèlement et incluent un rectangle ou un carré en direction axiale, les alésages de réception (32, 34 ; 36, 38) débouchant dans les surfaces latérales (4, 6) respectives étant décalés en diagonale par rapport à un bord périphérique contigu du carter (2).

8. Jeu de pièces détachées selon l'une des revendications précédentes, où chaque alésage de réception (32, 34, 36, 38) est relié par une voie d'écoulement de fluide sous pression au raccord de réservoir (T) ou au raccord de refoulement (P) d'une part, et d'autre part à un des raccords de travail (A, B) par une autre voie d'écoulement de fluide sous pression.

9. Jeu de pièces détachées selon la revendication 8, où les deux alésages de réception (32, 38 ; 34, 36) affectés à un raccord de travail (A, B) débouchent décalés l'un par rapport à l'autre dans les surfaces latérales opposées (2, 4) et sont reliés l'un à l'autre par un canal de liaison (44, 46), où débouche la voie d'écoulement de fluide sous pression conduisant au raccord (A, B) correspondant.

10. Jeu de pièces détachées selon l'une des revendications précédentes avec des garnitures d'éléments de distributeurs, telles qu'une soupape de non-retour (36) ou un diaphragme (108) à mettre en place dans les tronçons d'alésages (106) contigus aux raccords (P, T, A, B).

11. Jeu de pièces détachées selon l'une des revendications 2 à 10, avec des brides de fixation (8, 10) pour les aimants de commutation (12, 14).

12. Série de distributeurs à siège comprenant une pluralité de distributeurs différents, formés par un jeu de pièces détachées selon l'une des revendications précédentes.
